# EUROPÄISCHE PATENTSCHRIFT

(11) **EP 1 646 526 B1**
(45) Veröffentlichungstag und Bekanntmachung des Hinweises auf die Patenterteilung: **24.02.2016**
(21) Anmeldenummer: 04739069.5
(22) Anmeldetag: 25.03.2004
(51) Int. Cl.: B60L 11/18

(54) **KRAFTFAHRZEUG**
MOTOR VEHICLE
AUTOMOBILE

(30) Priorität: 09.07.2003 DE 10331084
(43) Veröffentlichungstag der Anmeldung: 19.04.2006
(60) Teilanmeldung: 10182944.8
(73) Patentinhaber: Wobben Properties GmbH, 26607 Aurich (DE)
(72) Erfinder:
(74) Vertreter: Eisenführ Speiser
(86) Internationale Anmeldenummer: PCT/EP2004/003151
(87) Internationale Veröffentlichungsnummer: WO 2005/009779

(56) Entgegenhaltungen:
- WO-A-02/074573
- WO-A-02/074573
- DE-C- 19 722 644
- JP-A- 10 271 694
- JP-A- 2001 258 177
- JP-A- 2002 315 193
- US-A- 3 904 947
- US-A- 5 642 270
- US-A- 5 642 270
- US-A- 5 767 584
- US-A- 6 107 691
- US-A- 6 107 691
- US-A1- 2003 059 654
- US-B1- 6 417 762

## Beschreibung

Die vorliegende Erfindung betrifft ein Kraftfahrzeug, mit wenigstens einem Elektromotor, einem Energiespeicher zum Bereitstellen von Antriebsenergie für den Elektromotor, mit einem an den Energiespeicher angeschlossenen Steckverbinder zum Anschluss an eine Stromquelle und mit einer Steuerung zum Steuern des Stromflusses von der Stromquelle zum Energiespeicher.

Solche Fahrzeuge sind bereits seit geraumer Zeit bekannt und eignen sich durchaus für Fahrten auf kurzen und mittleren Strecken. Um ein solches Fahrzeug benutzbar zu machen, muss der verfügbare Energiespeicher aufgeladen werden. Hat das Fahrzeug eine bestimmte Stecke zurückgelegt, muss der Speicher erneut aufgeladen werden. Dabei wird ein vorsichtiger Fahrer nach jeder Fahrt den Energiespeicher neu aufladen, um stets die größtmögliche Reichweite zu seiner Verfügung zu haben.

Als Stand der Technik wird an dieser Stelle allgemein auf folgende Druckschriften hingewiesen: DE 692 20 228; DE 197 22 644 sowie P 43 37 978.

Aus US-A-5,642,270 ist ein "Battery Powered Electrical Vehicle" gemäß Oberbegriff von Anspruch 1 bekannt, wobei das Dokument auf die Ermittlung des elektrischen Verbrauchs des Fahrzeugs abstellt, um eine finanzielle Bezahlung der elektrischen Energie zu ermitteln.

Aus "Electric-drive vehicles for peak power in Japan" W. Kempton, T. Kubo in "Energy Policy", Elsevier, Amsterdam (NL), Bd. 28 (2000), Seiten 9 bis 18 ist ein zeitabhängiger Einspeisetarif bekannt, bei dem die Vergütung für in das Netz eingespeisten Strom sich nach der Menge und der Zeit des eingespeisten Stroms richtet.

Da Fahrten mit den Fahrzeugen - wie mit allen anderen Fahrzeugen auch - nicht immer exakt vorausgeplant werden können, kann es bei einer solchen Vorgehensweise vorkommen, dass der Energiespeicher des Fahrzeugs gerade dann aufgeladen werden soll, wenn der Preis für die Energie am höchsten ist, und wenn außerdem das Netz am höchsten belastet ist, z. B. während einer so genannten Mittagsspitze.

Dies ist sowohl nachteilig wegen des hohen Einkaufspreises der Energie als auch nachteilig wegen der Belastung des ohnehin schon hoch belasteten Netzes.

Aufgabe der Erfindung ist es daher, ein Kraftfahrzeug anzugeben, das dazu beitragen kann, die Belastung bei Verbrauchsspitzen im Netz abzumildern.

Diese Aufgabe wird von einem Kraftfahrzeug gemäß Anspruch 1 gelöst. Auf diese Weise kann ein Stromfluss aus dem Energiespeicher des Kraftfahrzeugs zurück ins Netz erfolgen und so zur Deckung eines Spitzenbedarfs beitragen.

In einer bevorzugten Ausführungsform der Erfindung wird der Stromfluss vom Energiespeicher zur Stromquelle, also z. B. in das Stromnetz, so gesteuert, dass eine vorgebbare Restmenge elektrischer Energie in dem Speicher erhalten bleibt, indem die Steuerung bei Erreichen dieser vorgegebenen Rest-Ladungsmenge den Stromfluss zum Netz unterbricht. Dazu ist eine Einrichtung zum Erfassen der Ladungsmenge in dem Energiespeicher vorgesehen.

In einer bevorzugten Weiterbildung der Erfindung kommuniziert die Steuerung durch eine Kommunikations-Einrichtung mit dem Netz, so dass vom Netz aus abhängig vom Standort des Kraftfahrzeugs und der verfügbaren Ladungsmenge die Entnahme der Energie optimal gesteuert werden kann.

Besonders bevorzugt ist die Steuerung derart ausgebildet, dass sie eine Uhr umfasst oder mit einer Uhr verbunden ist. Dadurch kann die Steuerung derart arbeiten, dass Lade- und Entlade-Vorgänge in vorgebbaren Zeitabschnitten erfolgen. Auf diese Weise lässt sich erreichen, dass der Energiespeicher bevorzugt nachts aufgeladen wird, wenn einerseits die Belastung des Netzes gering ist und andererseits die Kosten für die Aufladung gering sind, während die Entladung bevorzugt zu Zeiten erfolgt, wenn eine Entlastung des Netzes sinnvoll und die Kosten für die Energie höher sind als die Kosten während der Aufladung. Dadurch lässt sich neben der Entlastung des Netzes für den Betreiber des Fahrzeugs noch ein wirtschaftlicher Vorteil erzielen.

Nachfolgend wird ein Ausführungsbeispiel der Erfindung anhand der Fig. näher beschrieben.

Die Fig. zeigt in einem vereinfachten Blockschaltbild die erfindungsgemäße Anordnung. Bezugszeichen 1 bezeichnet einen Rahmen, der diejenigen Komponenten umschließt, die dem Kraftfahrzeug zugeordnet sind. Demnach umfasst das Kraftfahrzeug eine Steuerung 10. Diese Steuerung 10 ist verbunden mit einem Energiespeicher 20, einem Antriebsmotor 40 und einem lösbaren Verbinder 50, der z. B. als Steckverbinder ausgeführt ist. Weiterhin besteht eine Verbindung zwischen diesem Verbinder 50 und einer Stromquelle 30, die hier als elektrisches Stromversorgungsnetz angedeutet ist.

Um ausreichend Energie für den Betrieb des Kraftfahrzeugs 1 bereit zu stellen, überwacht die Steuerung 10 den Ladezustand des Speichers, der z. B. eine Batterie, aber auch ein Kondensatorspeicher oder ähnliches sein kann. Erkennt die Steuerung 10, dass ein Aufladen des Speichers 20 erforderlich ist, lässt die Steuerung einen Stromfluss aus dem Netz 30 über den Verbinder 50 zu dem Speicher 20 zu und der Speicher wird aufgeladen. Dabei kann die Steuerung 10 natürlich auch die entsprechenden Lade-Charakteriska des Speichers berücksichtigen, so dass eine Überladung des Speichers sicher verhindert wird.

Weiterhin kann die Steuerung ebenfalls eine Aufladung in einem vorgebbaren ersten Zeitabschnitt ermöglichen. Dadurch wird es möglich, diesen Speicher 20 vorzugsweise nachts aufzuladen, wenn einerseits der Strompreis gering ist und damit Kosten für die Aufladung des Speichers ebenfalls vergleichbar gering bleiben und andererseits die Belastung des Netzes 30 nicht sehr hoch ist. Weiterhin kann die Steuerung derart ausgebildet sein, dass sie einen Stromfluss von dem Speicher 20 über den Steckverbinder 50 und einen Wechselrichter 60 in das Netz 30 zulässt. Dabei kann die abgebbare Ladungsmenge durch eine vorgebbare Rest-Ladungsmenge des Speichers 20 begrenzt werden.

Auf diese Weise kann z. B. nach einer Fahrt zur Arbeitsstelle bei vollgeladenem Speicher 20 die in dem Speicher noch vorhandene Energie wieder in das Netz 30 eingespeist werden, wenn der Bedarf besonders groß ist, z. B. zur Mittagsspitze. Die Steuerung unterbricht jedoch den Stromfluss vom Speicher 20 in das Netz 30, wenn eine vorgebbare Restmenge erreicht ist, so dass auf jeden Fall eine ausreichende Energiemenge im Speicher für die Rückfahrt am Abend sichergestellt ist.

Natürlich ist der zur Spitzenzeit in das Netz eingespeiste Strom entsprechend zu vergüten, so dass neben der Entlastung des Netzes auch noch ein wirtschaftlicher Vorteil zu erzielen ist.

Es wurde erfindungsgemäß vorgeschlagen, dass ein Fahrzeug mit einem elektrischen Energiespeicher auch als Energiequelle für ein Versorgungsnetz, aus dem das Fahrzeug möglicherweise seine Energie bezieht, zu verwenden.

Bekanntlich liegt der Strombedarf tagsüber deutlich über dem nächtlichen Strombedarf. So neigt beispielsweise der Strombedarf in einem öffentlichen Stromversorgungsnetzwerk von einem Tiefpunkt zwischen 1:00 Uhr und 4:00 Uhr nachts morgens an (Morgenspitze) erreicht um die Mittagszeit herum seinen Höchststand (Mittagsspitze) und klingt dann abends wieder ab bis er seinen Tiefstand mitten in der Nacht erreicht. Da also der Energiebedarf nachts deutlich geringer ist als das übliche Energieangebot und die Verbraucher auch Nachtstrom beziehen, ist er im Preis deutlich günstiger ist als der Strompreis für Tagesstrom.

Ein elektrisches Versorgungsnetzwerk muss dann so ausgelegt sein, dass es nicht nur den Bedarf nachts, sondern auch in den höchsten Tagesspitzen problemlos zu decken hat. Dies führt bei den elektrischen Versorgungsunternehmen dazu, dass eine große Anzahl von elektrischen Energieerzeugern bereitgestellt werden muss, die zuverlässig eine solche Bedarfdeckung auch bei höchsten Mittagspitzen (kalter Wintertag) gewährleistet.

Die Erfindung schlägt an dieser Stelle nun vor, dass ein Elektrofahrzeug, welches üblicherweise seine elektrische Energie aus einem elektrischen Versorgungsnetz zieht und deshalb auch über entsprechende Anschlüsse mit Anschluss an ein elektrisches Versorgungsnetz verfügt, nicht mehr mit der elektrischen Energie aus dem Versorgungsnetz geladen werden kann, sondern im Bedarfsfall auch bei einem bestimmten Zeitpunkt nicht benötigte Energie in das Versorgungsnetz einspeisen kann.

Wenn man einmal davon ausgeht, dass die Fahrzeuge werktags arbeitende Bevölkerung nur im Zeitraum zwischen 7:00 Uhr und 8:30 Uhr morgens und ca. 16:30 Uhr bis 18:30 Uhr benutzt werden müssen, steht ein solches Automobil die meiste Zeit des Tages unbenutzt auf einem Parkplatz. Das Aufladen des Energiespeichers des Elektrofahrzeugs nachts am Wohnort des Fahrzeughalters ist kein Problem und wird auch bereits durchgeführt. Neu ist aber der erfindungsgemäße Vorschlag, das Automobil auch nach Erreichen des Arbeitsplatzes mit einem elektrischen Stromnetz zu verbinden, um dann die im Bedarfsfall notwendige Energie für die Spitzenstromzeiten bereit zu stellen.

Wenn das Automobil dabei sehr schnell entladenen/aufladende Batterien verfügt, ist es daher möglich, schon bei einer Anzahl von 500-1000 Mobilen dieser Technik eine sehr große Einspeiseleistung dem Netz zur Verfügung zu stellen.

Der besondere Vorteil für das elektrische Versorgungsunternehmen besteht dabei darin, dass es auf einen elektrischen Energiespeicher zurück greifen kann, den es selbst nicht bezahlt hat und für dessen Wartung es auch nicht aufkommen muss. Für den Benutzer des Fahrzeugs besteht der Vorteil der Erfindung darin, dass er beispielsweise zur Mittagszeit, wenn er also ohnehin sein Automobil nicht benötigt, weil er an der Arbeitsstelle ist, den noch gut gefüllten Speicher seines Fahrzeugs des elektrische Versorgungsunternehmens quasi vermietet und die darin enthaltene Energie verkaufen kann. Der Verbraucher kann also die elektrische Energie aus dem Fahrzeug in das Versorgungsnetz mittags einspeisen und wird einen vergleichsweise guten Preis bekommen, während er nachts zum Aufladen seines Fahrzeugs zu einem günstigen Preis (Nachtstrom) laden muss.

Natürlich ist erfindungsgemäß auch vorgesehen, dass ein bestimmter Mindeststand des elektrischen Speichers des Fahrzeug nicht unterschritten wird und im Bedarfsfall kann auch nach der Mittagsspitze der elektrische Speicher des Fahrzeugs wieder aufgeladen werden und zwar dann, wenn der Bedarf im Netz nachmittags wieder abgeklungen ist.

Es kann aber auch vorgesehen werden, dass der Benutzer sein Fahrzeug individuell so einstellt, dass er abends ausreichend Energie hat, um den Nachhauseweg anzutreten (Mindestgehalt von Energie mit ausreichender Sicherheit), so dass die gesamte Aufladung des Speichers erst wieder in der darauffolgenden Nacht mit entsprechendem Nachstrom erfolgt.

Durch eine entsprechende Programmierung (möglicherweise auch über Ferneingabe (Handy des Benutzers)) kann also auch der Benutzer des Fahrzeugs die Zeiträume oder die Zeiten vorgeben, innerhalb derer überhaupt nur eine Entladung seines Speichers stattfinden kann.

Die Erfindung ist besonders in Ballungsräumen geeignet, wo große Parkplätze und große Parkgaragen betrieben werden. Ganz besonders scheint die Erfindung für den Einsatz in Parkgaragen von Flughäfen, insbesondere solche Flughäfen, die den Urlaubsverkehr abwickeln, geeignet zu sein, denn in solchen Flughäfen stehen oftmals viele tausend PKWs durchschnittlich 7 - 14 Tage völlig unbenutzt. Während dieser Zeit könnte sich ein entsprechendes Power-Management am entsprechenden Anschluss der Fahrzeuge, wenn sie als erfindungsgemäße elektrische Fahrzeuge ausgebildet sind, dem elektrischen Versorgungsnetz zur Verfügung stellen, welches in den Spitzenzeiten die jeweiligen Speicher der Fahrzeuge entlädt und in den geringeren Bedarfszeiten die Speicher der Fahrzeuge wiederum mit elektrischer Energie lädt.

Die Erfindung ist nachfolgend anhand eines in der Zeichnung dargestellten Ausführungsbeispiels näher erläutert.

Hierin zeigt Fig. 1 - wie beschrieben - ein Übersichtsbild für den Anschluss eines erfindungsgemäßen Fahrzeugs an ein elektrisches Versorgungsnetz. Fig. 2 zeigt ein übliches Tagesdiagramm des Strombedarfs bei einem elektrischen Versorgungsunternehmen. Fig. 3 zeigt eine Ladezustandszeittabelle mit dem Ladezustand eines erfindungsgemäßen Fahrzeugs.

Der elektrische Speicher des Fahrzeugs 1 ist mit einer entsprechenden Steuerungselektronik (Power Management System) ausgestattet, welche es erlaubt, nicht nur die elektrische Aufladung, sondern auch eine Entladung des Speichers auszulösen und zu steuern.

Darüber hinaus kann das Power-Management auch so programmiert sein, dass eine Entladung nur für eine ganz bestimmte vom Benutzer vorgegebene Zeiten möglich ist. Beispielsweise kann vorgesehen sein, dass eine Entladung und damit Einspeisung in das elektrische Energieversorgungsnetz nur während der Zeit von 10:00 Uhr morgens bis 15:00 Uhr nachmittags möglich ist, ansonsten, wenn das Fahrzeug an das Versorgungsnetz angeschlossen ist, eine entsprechende Ladung der Batterie erfolgt.

Auch kann das Power-Management so programmiert sein, dass bei einer vorgenommenen Entladung in der Zeit von 7:00 Uhr morgens bis 16:00 Uhr nachmittags nicht gleich eine Aufladung erfolgt, sondern eine Aufladung erst in der Nachtzeit zwischen 12:00 Uhr nachts und 4:00 Uhr morgens erfolgt, also dann, wenn besonders günstiger Nachtstrom aus einem elektrischen Versorgungsnetz zu beziehen ist.

Ferner kann das Energiemanagementsystem des Fahrzeugs so programmiert sein, dass eine Mindestlademenge grundsätzlich im Speicher verbleibt, also nicht in das Versorgungsnetz eingespeist werden kann, um in jedem Fall siherzustellen, dass der Benutzer die für ihn gewünschte Strecke mit dem Fahrzeug, also z.B. die Heimfahrt von der Arbeitsstelle nach Hause ordnungsgemäß durchführen kann.

Selbstverständlich sind noch weitere Programmierungen möglich, so dass das Energiemanagement auch vom Benutzer selbst in jeder nur erdenklichen Weise nach den Wünschen des Benutzers eingestellt werden kann, wobei im Bedarfsfall eine Einspeisemöglichkeit in das Versorgungsnetz möglich ist.

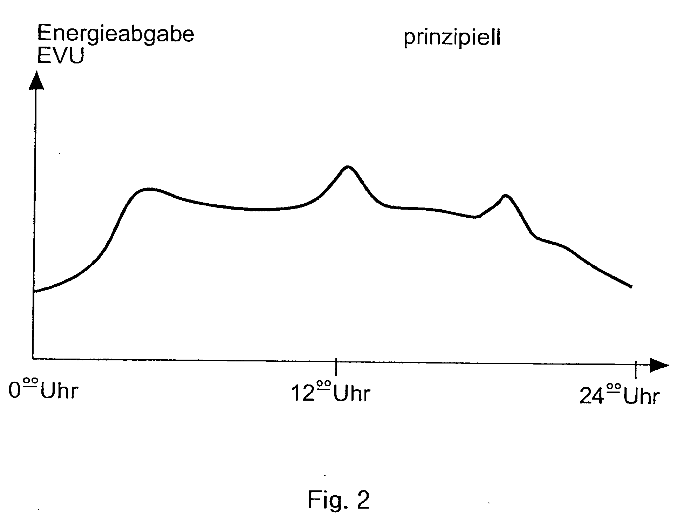

Wie man in Fig. 2 erkennen kann, ist der Strom/Energiebedarf eines elektrischen Versorgungsnetzes (EVU) nicht über den gesamten Tag linear verteilt, sondern steigt von einem Tiefstpunkt am frühen Morgen (ca.1:00 Uhr bis 3:00 Uhr nachts) an, erreicht eine erste Morgenspitze, erreicht dann später die sogenannte Mittagsspitze, also ihren Höchstpunkt und fällt dann unregelmäßig wieder zur Nacht hin ab. Das elektrische Versorgungsnetz, welches sich dazu verpflichtet, den am elektrischen Versorgungsnetz angeschlossenen Verbrauchern auch zu Spitzenzeiten stets die ausreichende elektrische Energie zur Verfügung zu stellen, muss nicht nur dafür sorgen, entsprechende Energie in das Versorgungsnetz nachzuführen, sondern auch immer so viel Energie bereit zu halten, dass zu allen Zeiten, d.h. also auch in außergewöhnlichen Spitzenzeiten stets die Verpflichtung der elektrischen Versorgung mit elektrischer Energie bei einem konstanten Spannungspegel und einer konstanten Frequenz bereit zu stellen. Es liegt auf der Hand, dass es hierzu auch schon heute eine Vielzahl von Steuerungseingriffen sowohl auf der Erzeugerseite als auch in der Verteilung der elektrischen Energie bedarf.

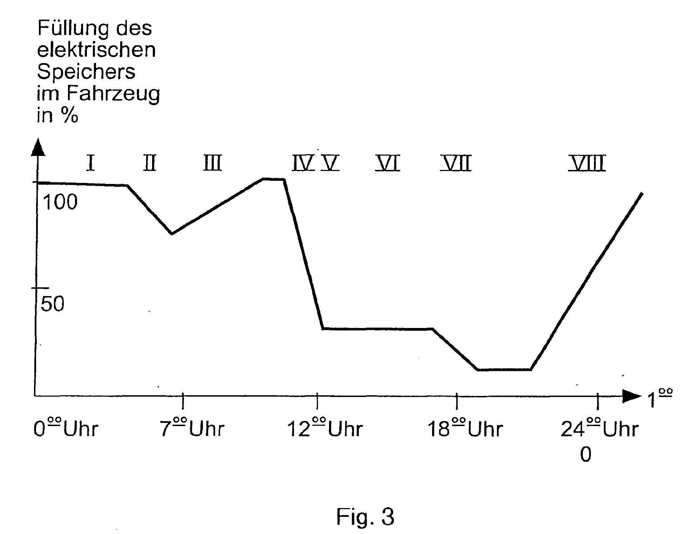

Fig. 3 zeigt einen beispielhaften Verlauf des Ladezustands des elektrischen Speichers eines erfindungsgemäßen Fahrzeugs. Im elektrischen Speicher, der in der Nacht mit Nachtstrom geladen wurde, also eine hundertprozentige Füllung (I) vorweist, sinkt dieser Ladezustand bei der morgendlichen Fahrt (II) zur Arbeit ab. Bei Erreichen (III) des Arbeitsplatzes und des Anschlusses des Fahrzeugs über die elektrischen Leitungen an das elektrische Versorgungsnetz wird der Ladezustand gegebenenfalls wieder auf 100% gebracht. Zur Mittagszeit (IV), also beim Auftreten der Mittagsspitze (siehe Fig. 2) wird ein Großteil der gespeicherten elektrischen Energie im Speicher in das angeschlossene elektrische Versorgungsnetz eingespeist, so dass der Ladezustand entsprechend innerhalb von sehr kurzer Zeit auf ein vorgesehenes Minimum (V) sinkt. Dieses Minimum ist vom Benutzer oder Fahrzeughersteller eingestellt worden (kann auch auf einem anderen Wege eingestellt werden) und sollte ausreichen, dass mit dem Fahrzeug noch die Heimfahrt angetreten werden kann, ohne es vorher aufzuladen.

Im dargestellten Beispiel kann aber der Ladezustand nachmittags (VI) auch wieder durch Aufnahme von Energie aus dem Versorgungsnetz erhöht werden, und während der Heimfahrt (VII) sinkt wieder der Ladezustand weiter ab. Im Anschluss des bei anschließendem Anschluss des Elektrofahrzeugs an das elektrische Versorgungsnetz kann der Ladezustand abends/nachts (VIII) wieder auf den vorgesehenen Wert (100%) gebracht werden.

Es sei nochmals darauf hingewiesen, dass der vorgesehene Verlauf gemäß Fig. 3 rein beispielhaft ist.

Wenn das Elektrofahrzeug über eine entsprechende Eingabeoberfläche verfügt, kann der Benutzer des Fahrzeugs eine Vielzahl von Einstellungen einnehmen.

So kann beispielsweise der Benutzer durch eine entsprechende Eingabe die Zeiträume vorgeben, innerhalb derer überhaupt nur eine Entladung des elektrischen Speichers bei Anschluss an ein elektrisches Versorgungsnetz erfolgen kann.

Wie eine entsprechende Dokumentation der Auflade- und Entladevorgänge zeigt, kann der Benutzer sich auch nach mehreren Tagen noch ansehen, wann welche Energiemengen in das elektrische Versorgungsnetz eingespeist wurden.

Das erfindungsgemäße Fahrzeug verfügt neben dem elektrischen Speicher, beispielsweise einer Lithiumbatterie oder einer anderen Speichertechnologie, über ein entsprechendes Power Management Programm zur Steuerung des Ladezustands des elektrischen Speichers und für die Verwertung der Eingaben des Benutzers als auch zur Dokumentation.

Darüber hinaus kann das Fahrzeug über eine entsprechende Daten-Schnittstelle (nebst Empfänger/Sender für Drahtlos (Handy-) Steuerung) verfügen, damit das Fahrzeug sämtliche für das Laden als auch für das Entladen (Einspeisung) notwendigen Daten an eine entsprechende Schnittstelle des elektrischen Energieversorgers senden oder empfangen kann.

Das erleichtert eine Dokumentation der jeweiligen Entlade- und Auflade-Zustände/Zeiten sowie deren Abrechnung. Bei der Abrechnung ist zu berücksichtigen, dass in der Mittagsspitze eingespeister Strom mit einem besseren Preis vergütet werden kann als Nachtstrom, der regelmäßig in größeren Mengen problemlos und günstiger zur Verfügung gestellt werden kann.

Die Entladung des Speichers mit der dann einhergehenden Einspeisung von elektrischer Energie in das Versorgungsnetz kann auch dazu verwendet werden, eventuell andere Fahrzeuge mit Elektrospeicher, denen der Ladezustand zu gering geworden ist, entsprechend soweit aufzuladen, dass diese noch weiterfahren können.

Die Erfindung erlaubt daher auch die elektrische Zusammenschaltung von mehreren Fahrzeugen mit ihren elektrischen Speichern.

Die vorliegende Erfindung beinhaltet auch, dass der elektrische Strom (elektrische Spannung) des Energiespeichers des Fahrzeugs zur Einspeisung in die Stromquelle (Netz) durch einen Wechselrichter 60 umgerichtet wird, so dass die Einspeisung in die Stromquelle möglich ist. Dieser Wechselrichter kann in jedem Fahrzeug ausgebildet sein, andererseits ist es aber auch möglich, dass der elektrische Strom des Energiespeichers zunächst durch Gleichstromübertragung aus dem Fahrzeug entnommen wird und dann der Wechselrichter außerhalb des Fahrzeugs ausgebildet ist (vom Fahrzeug aus gesehen hinter dem Netz und Anschluss des Fahrzeugs), so dass die dem Fahrzeug entnommene elektrische Leistung durch einen Wechselrichter für die Netzeinspeisung aufbereitet werden kann (z.B. 50Hz, Netzspannung usw.).

Besonders vorteilhaft ist es auch, dass eine zentrale Wechselrichterstation - für die Lieferung von Gleichstrom für den Speicher im Fahrzeug, aber auch für die Wechselstrom-Einspeisung in das Netz - ausgebildet ist, welche beispielsweise bei Garagenanlagen (z.B. an Flughäfen) ausgebildet ist, da hier an solchen Garagenanlagen große Mengen elektrischer Energie zustande kommen können, wenn entsprechend viele Fahrzeuge gemäß der vorliegenden Erfindung angeschlossen werden. Damit werden die Kosten für die Wechselrichter insgesamt relativ gering gehalten und gleichzeitig kann für eine ordnungsgemäße Wechselstromeinspeisung in das elektrische Netz gesorgt werden, da es relativ einfach ist, einzelne oder größere Wechselrichterstationen zu steuern als viele kleine Wechselrichter in Fahrzeugen, was letztlich auch zu Störungen, z.B. zu Oberschwingungen, im Netz führen könnte.

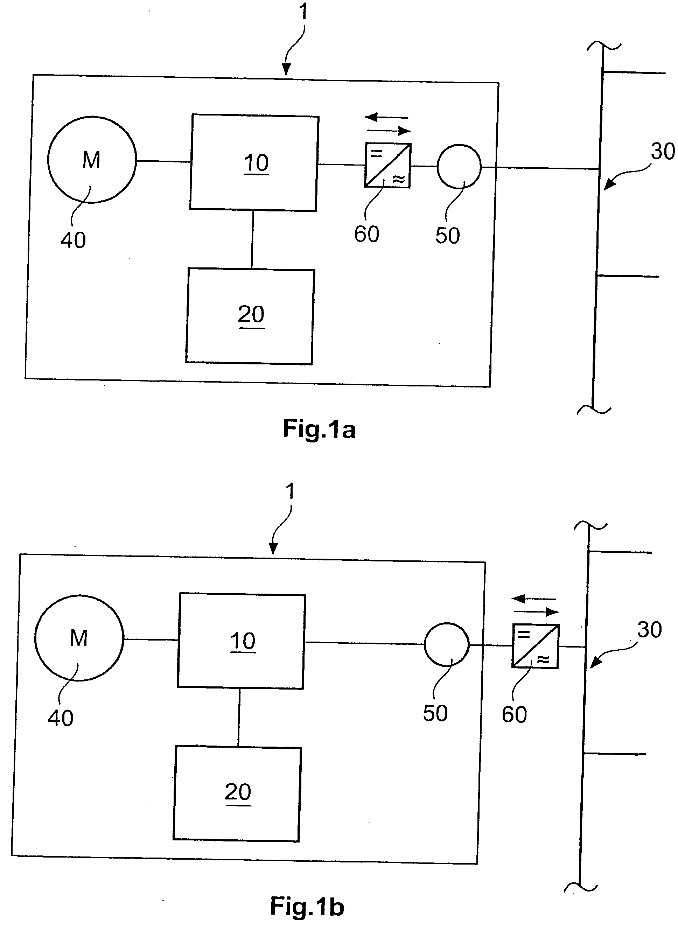

Da auch ein Wechselrichter einen Wirkungsgrad von weniger 1 hat, auch wenn dieser nur geringfügig unterhalb dem Idealwert von 1 liegt, sind die Verluste von einem Wechselrichter in einem Fahrzeug (Fig. 1a) sicherlich höher als bei einem stationären, zentralen Wechselrichter (Fig. 1b).

Auch bei einem Hausanschluss kann der Wechselrichter diesem zugeordnet werden, so dass auch ein Einzelfahrzeug an seinem heimischen Abstellplatz durchaus Energie zurückspeisen kann.

Da gerade Berufstätige häufig überschaubare Strecken zurückzulegen haben und die Fahrzeuge während des gesamten Arbeitstages nicht nutzen, ergibt sich ein statistisch nachweisbares Grundangebot an elektrischer Energie, die während der meisten Zeit (Berufszeit) zur Verfügung stehen. Wenn diese Energie regelmäßig verfügbar ist, können diese Speicher auch einen Betrag zu der gegenwärtig diskutierten, im Netz erforderlichen Regelenergie von Windenergieanlagen leisten. Besonders reizvoll ist dieses, wenn die Fahrzeugspeicher aus regenerativen Quellen geladen werden. Dann würden nämlich diese regenerativen Energiequellen wenigstens einen Teil der benötigten Regelenergie selbst erzeugen und bereitstellen.

## Patentansprüche

1. Kraftfahrzeug, mit wenigstens einem Elektromotor, einem Energiespeicher zum Bereitstellen von Antriebsenergie für den Elektromotor, mit einem an den Energiespeicher angeschlossenen Steckverbinder zum Anschluss an eine Stromquelle und mit einer Steuerung zum Steuern des Stromflusses von der Stromquelle zum Energiespeicher, wobei
die Steuerung (10) einen Stromfluss vom Energiespeicher (20) zur Stromquelle (Netz) (30) zulässt und ein Wechselrichter im oder außerhalb des Fahrzeugs vorgesehen ist, mittels dem die elektrische Leistung des Energiespeichers als Wechselstrom in die Stromquelle (Netz) eingespeist werden kann,
**dadurch gekennzeichnet, dass** in dem Fahrzeug eine Aufzeichnungseinheit vorgesehen ist, die festhält, wann welche Menge elektrischer Energie in den Energiespeicher des Fahrzeugs geladen wurde und wann welche Menge elektrischer Energie aus dem Energiespeicher des Fahrzeugs in die Stromquelle (Netz) eingespeist wurde.

2. Kraftfahrzeug nach einem der vorstehenden Ansprüche,
**gekennzeichnet durch** eine Kommunikations-Einrichtung zur Kommunikation zwischen der Steuerung (10) und dem Netz (30).

3. Kraftfahrzeug nach einem der vorstehenden Ansprüche,
**dadurch gekennzeichnet, dass** die Steuerung eine Uhr umfasst oder mit einer Uhr verbunden ist.

4. Fahrzeug nach einem der vorhergehenden Ansprüche,
**dadurch gekennzeichnet, dass** mittels der Steuerung der Speicher bei Anschluss an ein elektrisches Versorgungsnetz mit kontrollierter elektrischer Energie geladen wird.

5. Fahrzeug nach einem der vorhergehenden Ansprüche,
**dadurch gekennzeichnet, dass** der Steuerung ein Power Management Programm zugeordnet ist, welches bei Anschluss des Fahrzeugs an ein elektrisches Versorgungsnetz eine automatische Aufladung oder Entlade Vorgang des Speichers veranlasst.

6. Fahrzeug nach einem der vorhergehenden Ansprüche,
**dadurch gekennzeichnet, dass** das Fahrzeug mit einem Stromzähler/ Energiezelle ausgestattet ist, welcher die im Speicher aufgenommene elektrische Energie in das Versorgungsnetz eingespeiste Energie misst.

7. Fahrzeug nach einem der vorhergehenden Ansprüche,
**dadurch gekennzeichnet, dass** das Fahrzeug einen elektrischen Anschlussstecker aufweist, welcher mit einem entsprechenden Anschlussstecker des elektrischen Versorgungsnetzes verbindbar ist, wobei der Anschlussstecker eine Erdleitung aufweist mittels welcher Daten des Fahrzeugs über ein Datennetz des elektrischen Versorgungsunternehmens austauschbar sind und darüber hinaus weitere Daten über das Datennetz eingespeist werden können, beispielsweise Daten über den Zustand des elektrischen Speichers des Fahrzeugs.

8. Fahrzeug nach einem der vorhergehenden Ansprüche,
**dadurch gekennzeichnet, dass** außerhalb des Fahrzeugs ein Wechselrichter ausgebildet ist, mittels dem der Strom des Energiespeichers des Fahrzeugs zur Einspeisung in die Stromquelle (Netz) bereitgestellt wird.

## Claims

1. Motor vehicle having at least one electric motor, an energy store for providing drive energy for the electric motor, having a plug type connector which is connected to the energy store for connection to a current source and having a control system for controlling the current flow from the current source to the energy store, wherein
the control system (10) permits a current flow from the energy store (20) to the current source (network) (30) and there is provided in or outside the vehicle an inverter by means of which the electrical power of the energy store can be supplied as an alternating current to the current source (network),
**characterised in that** there is provided in the vehicle a recording unit which records when what quantity of electrical energy has been charged into the energy store of the vehicle and when what quantity of electrical energy has been supplied from the energy store of the vehicle to the current source (network).

2. Motor vehicle according to any one of the preceding claims, **characterised by** a communication device for communication between the control system (10) and the network (30).

3. Motor vehicle according to either of the preceding claims, **characterised in that** the control system comprises a clock or is connected to a clock.

4. Vehicle according to any one of the preceding claims, **characterised in that**, by means of the control system, the store is charged with controlled electrical energy when connected to an electrical supply network.

5. Vehicle according to any one of the preceding claims, **characterised in that** there is associated with the control system a power management programme which, when the vehicle is connected to an electrical power supply network, brings about an automatic charging or discharging operation of the store.

6. Vehicle according to any one of the preceding claims, **characterised in that** the vehicle is provided with a current counter/energy cell which measures the electrical energy received in the store energy which is supplied to the power supply network.

7. Vehicle according to any one of the preceding claims, **characterised in that** the vehicle has an electrical connection plug which can be connected to a corresponding connection plug of the electrical power supply network, wherein the connection plug has an earth line by means of which data of the vehicle can be exchanged via a data network of the electrical power supply company and furthermore additional data can be supplied via the data network, for example, data relating to the status of the electrical store of the vehicle.

8. Vehicle according to any one of the preceding claims, **characterised in that** there is constructed outside the vehicle an inverter by means of which the current of the energy store of the vehicle is provided for supply to the current source (network).

## Revendications

1. Véhicule automobile comprenant au moins un moteur électrique, un accumulateur d'énergie servant à fournir une énergie d'entraînement pour le moteur électrique, comprenant un connecteur enfichable raccordé à l'accumulateur d'énergie, destiné à être raccordé à une source de courant et comprenant une commande servant à commander le flux de courant provenant de la source de courant en direction de l'accumulateur d'énergie,
la commande (10) autorisant un flux de courant depuis l'accumulateur d'énergie (20) vers la source de courant (réseau) (30) et un onduleur étant prévu dans le véhicule ou à l'extérieur de ce dernier, au moyen duquel la puissance électrique de l'accumulateur d'énergie peut être injectée dans la source de courant (réseau) en tant que courant alternatif,
**caractérisé en ce qu'**est prévue, dans le véhicule, une unité d'enregistrement, qui mémorise le moment où l'énergie électrique du véhicule a été chargée dans l'accumulateur d'énergie du véhicule et en quelle quantité et le moment où l' énergie électrique provenant de l'accumulateur d'énergie du véhicule a été injectée dans la source de courant (réseau) et en quelle quantité.

2. Véhicule automobile selon l'une quelconque des revendications précédentes,
**caractérisé par** un dispositif de communication servant à la communication entre la commande (10) et le réseau (30) .

3. Véhicule automobile selon l'une quelconque des revendications précédentes,
**caractérisé en ce que** la commande comprend une horloge ou est reliée à une horloge.

4. Véhicule selon l'une quelconque des revendications précédentes,
**caractérisé en ce qu'**au moyen de la commande, l'accumulateur est chargé en une énergie électrique contrôlée lors du raccordement à un réseau d'alimentation électrique.

5. Véhicule selon l'une quelconque des revendications précédentes,
**caractérisé en ce qu'**est associé à la commande, un programme de gestion de puissance, qui entraîne, lors du raccordement du véhicule à un réseau d'alimentation électrique, une opération automatique de chargement ou de déchargement de l'accumulateur.

6. Véhicule selon l'une quelconque des revendications précédentes,
**caractérisé en ce que** le véhicule est équipé d'un compteur électrique/d'une cellule d'énergie, lequel/laquelle mesure l'énergie électrique reçue dans l'accumulateur, l'énergie injectée dans le réseau d'alimentation.

7. Véhicule selon l'une quelconque des revendications précédentes,
**caractérisé en ce que** le véhicule présente une fiche de raccordement électrique, qui peut être raccordée à une fiche de raccordement correspondante du réseau d'alimentation électrique, la fiche de raccordement présentant une ligne de masse, au moyen de laquelle des données du véhicule peuvent être échangées par l'intermédiaire d'un réseau de données de l'entreprise de distribution électrique et, par ailleurs, au moyen de laquelle d'autres données peuvent être injectées par l'intermédiaire du réseau de données, par exemple des données portant sur l'état de l'accumulateur électrique du véhicule.

8. Véhicule selon l'une quelconque des revendications précédentes,
**caractérisé en ce qu'**est réalisé à l'extérieur du véhicule un onduleur, au moyen duquel le courant de l'accumulateur d'énergie du véhicule est fourni aux fins de l'injection dans la source de courant (réseau).
